Europäisches Patentamt

European Patent Office

Office européen des brevets

(19)

(11) Numéro de publication: **0 249 518 B1**

## FASCICULE DE BREVET EUROPEEN

(12)

(45) Date de publication de fascicule du brevet:
03.04.91

(51) Int. Cl.⁵: **B60R 19/18**

(21) Numéro de dépôt: 87401154.7

(22) Date de dépôt: 22.05.87

(54) Elément de protection composite en matière synthétique, notamment pour l'avant ou l'arrière d'un véhicule automobile.

(30) Priorité: 10.06.86 FR 8608349

(43) Date de publication de la demande:
16.12.87 Bulletin 87/51

(45) Mention de la délivrance du brevet:
03.04.91 Bulletin 91/14

(84) Etats contractants désignés:
**BE DE ES GB IT SE**

(56) Documents cités:
**DE-A- 2 550 019**
**FR-A- 2 364 789**
**FR-A- 2 481 218**

(73) Titulaire: **REGIE NATIONALE DES USINES RE-NAULT**
**Boîte postale 103 8-10 avenue Emile Zola**
**F-92109 Boulogne-Billancourt(FR)**

(72) Inventeur: **Liadouze, Alain**
**18, rue Gabriel Péri**
**F-78330 Fontenay Le Fleury(FR)**
Inventeur: **Bauchel, Jean-Paul**
**3, rue Linne**
**F-78500 Sartrouville(FR)**
Inventeur: **Alvez, Gilbert**
**1, rue Albert 1er**
**F-92370 Chaville(FR)**

(74) Mandataire: **Réal, Jacques**
**8 & 10, avenue Emile Zola**
**F-92109 Boulogne-Billancourt(FR)**

Rank Xerox (UK) Business Services

## Description

La présente invention se rapporte à des éléments de protection composite du type pare-chocs, pour l'avant ou l'arrière de véhicules automobiles, tel que défini dans le preambule de la revendication 1 et 2 . Un tel pare-chocs est connu par le document FR-A 2.364.788.

On connaît déjà des structures composites en matières synthétiques destinées à absorber l' énergie incidente au niveau des zônes exposées d'un véhicule.

Ces structures peuvent par exemple résulter de la combinaison suivante :
- un profilé de support, tel qu'une lame en préimprégné de tissus en fibres de verre et d'une matière thermodurcissable du type époxy ou polyester,
- des absorbeurs, localisés au niveau des attaches de la lame précédente aux extrémités des longerons ; ils sont de structure cellulaire et obtenus par moulage d' élastomères thermodurcissables ou thermoplastiques,
- une jupe souple extérieure revêtant les éléments précédents, et comportant certains dispositifs tels que cataphotes, feu de signalisation, aubages de ventilation, etc... résultant de la transformation de matières thermoplastiques injectables.

La structure ci-dessus est disposée contre la traverse du véhicule qui lui sert d'appui et dont la présence est par conséquent nécessaire.

La présente invention a pour but de diminuer le prix de revient de cet élément de protection composite, en le simplifiant et en augmentant sa rapidité de montage.

Dans ce but, l' élément de protection composite de pare-chocs correspondant à la présente invention est caractérisé par les caractéristiques de la seconde partie de la revendication 1 et 2.

Elle sera décrite, à titre d'exemple non limitatif, au regard des figures 1 à 6 ci-jointes, qui représentent respectivement :
- la figure 1
: une vue en perspective éclatée d'une première réalisation de l'élément de protection,
- la figure 2
: une vue en coupe selon l'axe de la caisse de l'élément ci-dessus,
- la figure 3
: une vue en coupe au droit des appuis dudit élément,
- les figures 4 à 6
: des vues analogues aux précédentes d'une seconde réalisation de l'invention,

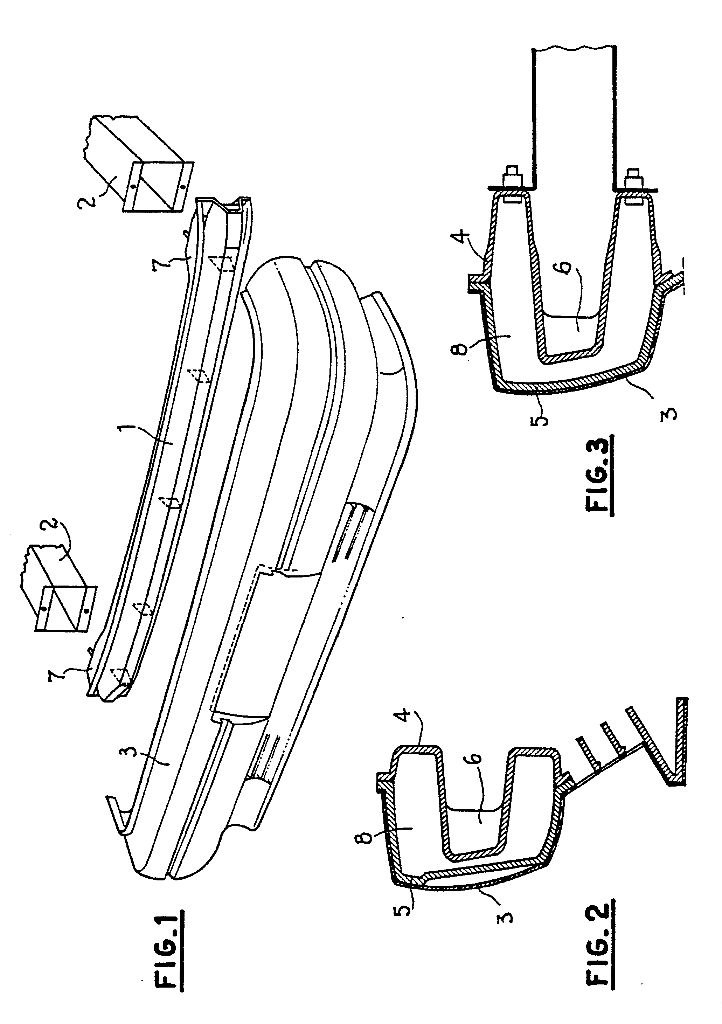

La zône d'absorption d'énergie de la partie antérieure d'un véhicule automobile est schématisée en vue éclatée à la figure 1 ; on voit qu'elle est constituée d'une poutre transversale 1 prenant directement appui par des protubérances 7 sur les extrémités libres des longerons 2 et de ce fait servant de traverse à la structure porteuse du véhicule ; ladite poutre 1 est recouverte d' une façade 3 qui ne possède pas de résistance mécanique particulière, mais confère à l'ensemble les propriétés esthétiques et aérodynamiques recherchées ; au contraire la poutre 1 est le seul élément qui apporte à l'ensemble ci-dessus les caractéristiques de résistance aux chocs et d'absorption d'énergie, résultant des volumes 8 qu'elle détermine.

Elle est constituée de préférence de deux profilés distinctes 4-5, pouvant résulter de deux matières synthétiques différentes, apportant chacune leurs propriétés propres au produit composite issu de leur assemblage.

A titre d'exemple, la partie antérieure 5 en forme de U serait une peau de polypropylène obtenue par injection, solidarisée par tout moyen connu à la partie postérieure 5 en une matière estampable telle qu'un préimprégné de tissus de verre et de résine époxy, conformé par pressage sous la forme d'un W ; cette dernière joue le rôle de traverse, dont la résistance aux chocs est encore accrue par la présence d'ailes de rigidifications 6.

On voit que le volume fermé obtenu constitue ainsi la poutre 1, dont la déformation détermine la capacité d'absorption d'énergie, essentiellement dûe à sa partie antérieure 5.

On remarque que par rapport aux structures analogues de la technique antérieure, l'absence de traverse et d'absorbeurs cellulaires localisés entraîne un gain de poids, de pièces et détermine une simplicité de montage améliorant le prix de revient final.

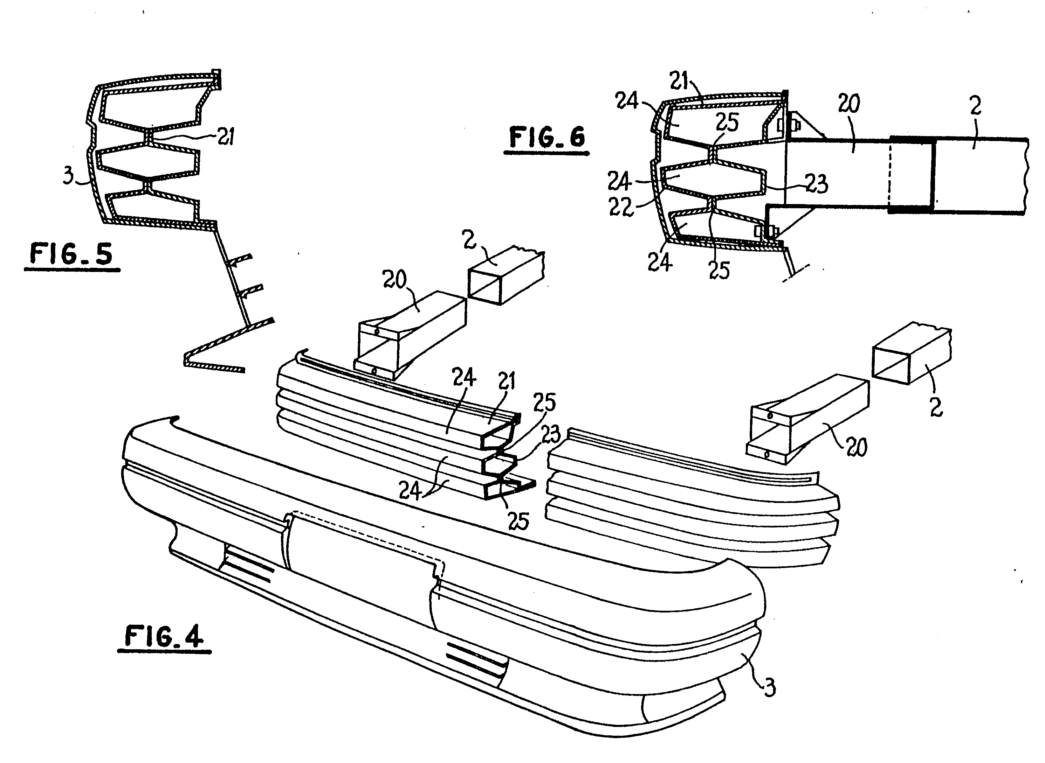

La variante de la figure 4 diffère de la réalisation précédente essentiellement par le remplacement des protubérances 7 de fixation de la poutre 1 sur les ongerons 2 par des éléments rapportés 20 solidarisés par tout moyen connu à la face postérieure de la poutre 21 et par la forme de cette dernière.

En effet, celle-ci, comme dans le cas précédent, constituée de deux profilés séparées 22-23 crénelées qui, lorsqu'elles sont assemblées, déterminent plusieurs volumes 24 séparés par des zônes d'appui 25 bien visibles aux figures 5 et 6.

Cette solution est mise en oeuvre de préférence par la technique de soufflage particulièrement économique.

On retrouve la façade décorative 3 analogue à la réalisation précédente.

## Revendications

1. Elément de protection composite en matière synthétique notamment pour véhicule automobile, du type constitué par une poutre transversale (1) en matière synthétique prenant directement appui par sa face postérieure sur les extrémités libres des longerons (2), recouverte d'une façade (3) lui conférant les propriétés esthétiques et aérodynamiques recherchées ainsi que des capacités d'absorption d'énergie et de résistance au choc, caractérisé en ce que la poutre (1) résulte de l'assemblage de deux profilés distincts (4, 5) de préférence en matières synthétiques différentes, la partie antérieure (5) en forme de U étant une peau en polypropylène, la partie postérieure (4) en forme de W comportant des ailes de rigidification (6) étant en une matière estampable du type préimprégné de tissus de verre et de résine époxy.

2. Elément de protection composite en matière synthétique, notamment pour véhicule automobile, du type constitué par une poutre transversale (21) en matière synthétique prenant directement appui par sa face postérieure sur les extrémités libres des longerons (2) recouverte d'une façade (3) lui conférant les propriétés esthétiques et aérodynamiques recherchées ainsi que des capacités d'absorption d'énergie et de résistance au choc, caractérisé en ce que la poutre (21) résulte de l'assemblage de deux profilés (22, 23) crénelés qui déterminent des volumes (24) séparés par des zones d'appui (25).

3. Elément de protection selon les revendications 1 et 2, caractérisé en ce que la poutre (1, 21) comporte des protubérances postérieures (2, 20) qui coopèrent avec les extrémités libres des longerons (2).

## Claims

1. A composite protective element of synthetic material, in particular for a motor vehicle, of the type comprising a transverse beam member (1) of synthetic material which directly bears by way of its rear face against the free ends of the longitudinal frame members (2), being covered by a facing portion (3) which imparts thereto the desired aesthetic and aerodynamic properties as well as capacities for energy absorption and impact strength, characterised in that the beam member (1) results from the assembly of two separate shaped portions (4, 5), preferably of different synthetic materials, the front U-shaped portion (5) being a skin of polypropylene and the rear W-shaped portion (4) comprising rigidification limb's (6) being of a stampable material of the type comprising a pre-impregnated material of glass cloths and epoxy resin.

2. A composite protective element of synthetic material, in particular for a motor vehicle, of the type comprising a transverse beam member (21) of synthetic material which directly bears by way of its rear face against the free ends of the longitudinal frame members (2), being covered by a facing portion (3) which imparts thereto the desired aesthetic and aerodynamic properties as well as capacities for energy absorption and impact strength, characterised in that the beam member (21) results from the assembly of two crenellated portions (22, 23) which define volumes (24) separated by support zones (25).

3. A protective element according to claim 1 and claim 2 characterised in that the beam member (1, 21) comprises rearward projections (2, 20) which co-operate with the free ends of the longitudinal frame members (2).

## Ansprüche

1. Aus synethetischem Material zusammengesetztes Schutzelement insbesondere für Kraftfahrzeuge, bestehend aus einem Querträger (1) aus Kunststoff, der sich direkt mit seiner hinteren Fläche auf den freien Enden von Holmen (2) abstützt und der mit einer Verkleidung (3) bedeckt ist, die ihm die gewünschten ästhetischen und aerodynamischen Eigenschaften verleiht sowie Eigenschaften der Energieabsorption und der Widerstandsfähigkeit gegen Stöße, dadurch gekennzeichnet, daß der Träger (1) das Resultat ist des Zusammenbaues zweier getrennter Profile (4, 5), vorteilhafterweise aus unterschiedlichen Kunststoffen, wobei der vordere U-förmige Abschnitt (5) aus Polypropylen besteht und der hintere W-förmige Abschnitt (4) Versteifungsrippen (6) aufweist aus einem verformbaren Kunststoff von der Art eines imprägnierten Glasgewebes oder Epoxyharzes.

2. Aus synethetischem Material zusammengesetztes Schutzelement insbesondere für Kraftfahrzeuge, bestehend aus einem Querträger (1) aus Kunststoff, der sich direkt mit seiner hinteren Fläche auf den freien Enden von Holmen (2) abstützt und der mit einer Verkleidung (3) bedeckt ist, die ihm die gewünschten ästhetischen und aerodynamischen Eigenschaften verleiht sowie Eigenschaften der Energieabsorption und der Widerstandsfähigkeit gegen Stöße, dadurch gekennzeichnet, daß der Träger (21) das Ergebnis des Zusammenbaus zweier gezackter Profile (22, 23) ist, welche durch Stützzonen (25) getrennte Räume (24) bilden.

3. Schutzelement nach Ansprüchen 1 und 2, dadurch gekennzeichnet, daß der Träger (1, 21) hintere Vorsprünge (2, 20) aufweist, die mit den freien Enden der Holme (2) zusammenwirken.

FIG.1

FIG.2

FIG.3

FIG.5

FIG.6

FIG.4

21

3

21

24

25

20

2

24

24

22

23

24

25

20

2

20

2

24

21

25

23

24

25

20

2

3

EP 0 249 518 B1